# EUROPÄISCHE PATENTANMELDUNG

(11) **EP 1 104 156 A1**
(43) Veröffentlichungstag der Anmeldung: **30.05.2001**
(21) Anmeldenummer: 99122851.1
(22) Anmeldetag: 17.11.1999
(51) Int. Cl.: H04M 3/533, H04L 12/58, H04N 7/173

(54) **Video Mail System für die öffentliche Verwendung und Betriebsverfahren**

(71) Anmelder: I-TV MEDIA AG, 8008 Zürich (CH)
(72) Erfinder: Schibli, Oliver, 8008 Zürich (CH); Feldges, Marco, 3027 Bern (CH); Stefancic, Slaven, 8003 Zürich (CH)
(74) Vertreter: Patentanwälte Schaad, Balass, Menzl & Partner AG

(57) **Zusammenfassung**

Das Video Mail System (1), das in ein für die öffentliche Verwendung geeignetes Gehäuse (100) integriert ist, weist ein mit einem über eine Schnittstelle (8) mit einem Kommunikationsnetz (12) und über ein Encodermodul (45) und eine Videokarte (41) bzw. eine Audiokarte (51) mit einer Videokamera (4) und einem Mikrofon (5) verbundenes Computersystem (2) auf, das mit einer Festplatte (21), einer Grafikkarte 22, einem Computermonitor (23), einer Tastatur (24) und einem Betriebssystem, einem e-Mail-Programm sowie einem Video Mail Anwenderprogramm(3) versehen ist, das aus einem zur Kommunikation mit einem Anwender dienenden Steuermodul (31) und einem zur Steuerung von Videoaufnahmen dienenden Stapelmodul (32) besteht.

## Beschreibung

Die Erfindung betrifft ein Video Mail System nach Anspruch 1 und ein Betriebsverfahren nach Anspruch 9.

Video Mail Systeme, wie sie zum Beispiel aus der Patentschrift U.S. 5,557,320 bekannt sind, erlauben den Versand von Video Mails von einem Absender über ein Netzwerk zu einem Empfänger. Dieses bekannte Video Mail System, das eine Video Kamera, ein Analog/Digital-Wandler, gegebenenfalls eine Kompressionseinheit und ein Computer System umfasst, ist für den Einsatz in Haushalten und Büros durch Anwender geeignet, die über vertiefte Systemkenntnisse verfügen. Für die öffentliche Verwendung sind diese Systeme hingegen nicht geeignet.

Der Einsatz moderner Kommunikationsmittel, insbesondere von Video Mail Systemen, im öffentlichen Bereich dürfte in Zukunft jedoch mit hohem Nutzen für die Anwender verbunden sein.

Der Erfindung liegt daher die Aufgabe zugrunde, ein für die öffentliche Verwendung geeignetes Video Mail System sowie ein entsprechendes Verfahren für den Betrieb dieses Systems zu schaffen.

Die Lösung dieser Aufgabe gelingt mit den in Anspruch 1 bzw. 9 angegebenen Massnahmen.

Das erfindungsgemässe Video Mail System ist für den öffentlichen Betrieb geeignet und erlaubt es Anwendern, Video- und Audiodaten aufzunehmen und mit einem Video Mail an einen gewünschten Empfänger zu versenden. Vorkenntnisse zur selbständigen Bedienung des Video Mail Systems sind nicht erforderlich.

Das System ist daher für den Einsatz beispielsweise in Kaufhäusern, Verkehrsbetrieben oder auch in öffentlich zugänglichen Kabinen geeignet.

Die Wartung, Aufdatierung und Verwaltung von einem oder mehreren Video Mail Systemen kann über ein Netzwerk durch einen Administrator bzw. über ein am Netzwerk angeschlossenes Terminal erfolgen.

In einer vorzugsweisen Ausgestaltung kann der Administrator vom Anwender eingegebene Daten abrufen und zur späteren Verwendung auf einer Datenbank ablegen. Ferner kann der Administrator Daten (Informationen / Werbung / Updates) an die Video Mail Systeme übertragen, um die Systeme für den Betreiber und potentielle Anwender auch nutzbar zu machen, wenn kein Video Mail aufgenommen wird.

In einer vorzugsweisen Ausgestaltung sind Massnahmen vorgesehen, durch die Zugang zum Video Mail System erst nach Eingabe eines Passwortes oder Entrichtung einer Benutzungsgebühr gewährt wird.

Die Erfindung wird nachstehend anhand einer Zeichnung näher erläutert. Dabei zeigen:
- Fig. 1: ein erfindungsgemässes Video Mail System und
- Fig. 2: einen für den Betrieb dieses Video Mail Systems vorgesehenen Ablauf des Betriebsverfahrens.

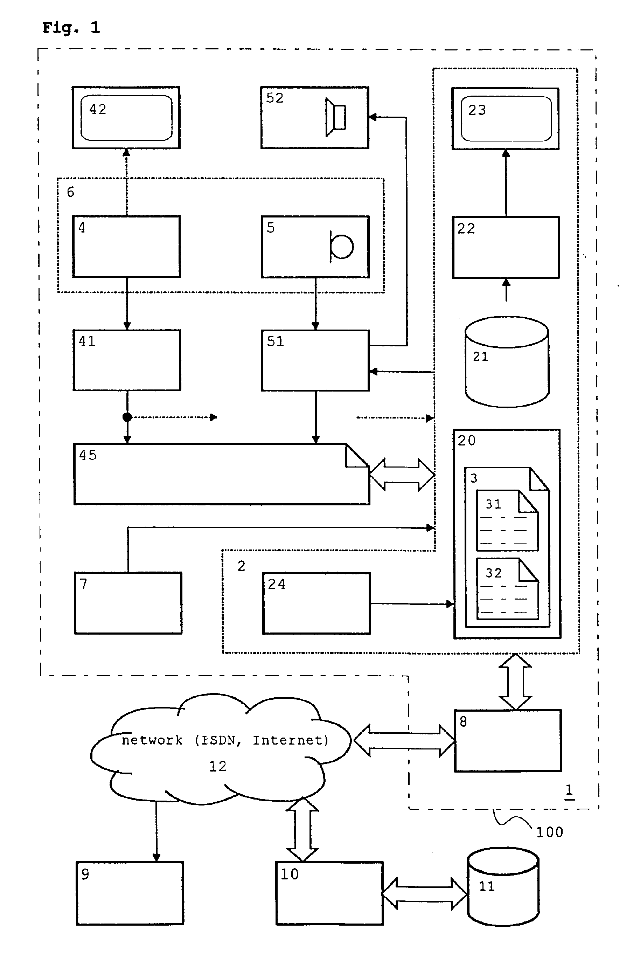

Das in Fig. 1 gezeigte erfindungsgemässe Video Mail System 1 weist ein einem Personalcomputer entsprechendes Computersystem 2 auf, das unter anderem eine Recheneinheit 20 (Prozessor und dynamischer Arbeitsspeicher), eine Festplatte 21, eine Grafikkarte 22, einen Computermonitor 23 und eine Tastatur (gegebenenfalls auch eine Maus) 24 sowie ein entsprechendes Betriebssystem aufweist und über ein Modem 8 (oder eine Schnittstellenkarte (z.B. Ethernet)) mit einem Kommunikationsnetz 12 (ISDN / Internet) bzw. daran angeschlossenen Teilnehmern 9; 10 verbunden ist. Nebst Teilnehmern 9, denen Video Mails zugesandt werden können, ist vorzugsweise auch ein Administrator 10 über das Kommunikationsnetz 12 mit dem Video Mail System 1 verbunden.

Das erfindungsgemässe Video Mail System 1 weist ferner eine Videokamera 4 und ein Mikrofon 5 auf, die über eine Videokarte (sogenannte Videograbberkarte) 41 und eine Audiokarte 51 (z.B. Creative SB-Live) mit einem vorzugsweise auf Software basierenden Encodermodul 45 verbunden sind. Die Videokarte 41 und die Audiokarte 51 dienen zur Digitalisierung von den Signalquellen 4, 5 vorzugsweise im Basisband abgegebenen Video- und Audiosignale. Die Audiokarte 51, die mit wenigstens einem Lautsprecher 52 verbunden ist weist einen zweiten Audioeingang auf, dem vom Computersystem 2 abgegebene Audiosignale zuführbar sind.

Im Encodermodul 45 werden die digitaliserten Audio- und Videosignale codiert, vorzugsweise auch komprimiert und an das Computersystem 2 übertragen. Die Speicherung der resultierenden Video- und Audiodatei erfolgt in einer Datei auf der Festplatte 21.

Von der Videokamera 4, die mit dem Mikrofon 5 vorzugsweise in ein Gerät 6 integriert ist, ist vorzugsweise mit einem Kontrollmonitor 42 verbunden.

Nebst der Tastatur 24 ist in einer vorzugsweisen Ausgestaltung der Erfindung ein weiteres Eingabegerät 7 vorgesehen, anhand dem die Einzahlung einer Benutzungsgebühr erfolgen kann.

Das Computersystem 2 verfügt ferner über ein Betriebssystem wie Windows 95 oder Windows NT sowie eine zum Versand von Mails geeignete e-Mail-Software (z.B. Microsoft ©, Outlook ©). Das erfindungsgemässe Video Mail System 1 basiert daher vorzugsweise auf einem standardisierten Personalcomputer, der zum Empfang und zum Versand von e-Mails geeignet ist.

Für den Betrieb des Video Mail Systems 1 ist ein Anwendungsprogramm 3 mit einem Steuermodul 31 und einem Stapelmodul 32 vorgesehen. Das Steuermodul 31, das die einfache Kommunikation mit einem Anwender bzw. einem Absender eines Video Mails erlaubt, erzeugt auf dem Computermonitor 23 eine Oberfläche mit Informations-, Schalt-, Ein- und Ausgabefeldern aufweisenden Formularen, die sequentiell den erreichten Programmstufen angepasst werden und in wenigen Schritten durch einen Programmzyklus führen. Das kompilierte Steuermodul 31 kann z.B. in der Programmiersprache "Visual Basic" geschrieben sein, durch die Formulare mit den entsprechenden Programmelementen erzeugt werden können. Über das Steuermodul 31 eingegebene Daten, dienen dem Stapelmodul 32 zur Steuerung der Aufnahme von Videodaten. Die Einbindung von Adress-, Text und Videodaten in e-Mails, die nach Abschluss eines Programmzyklus versandt werden, erfolgt durch das Anwendungsprogramm 3 oder eines der genannten Module 31; 32.

Damit das erfindungsgemässe Video Mail System 1 im öffentlichen Bereich betrieben werden kann, ist ein Gehäuse 100 vorgesehen, durch das die Elemente des Video Mail Systems 1 mit Ausnahme der Eingabeeinheiten 7, 24 dem Zugriff des Anwenders entzogen sind. Vorzugsweise wird ein benutzergerecht gestalteter Aluminiumzylinder verwendet, in den die Geräte eingefügt sind.

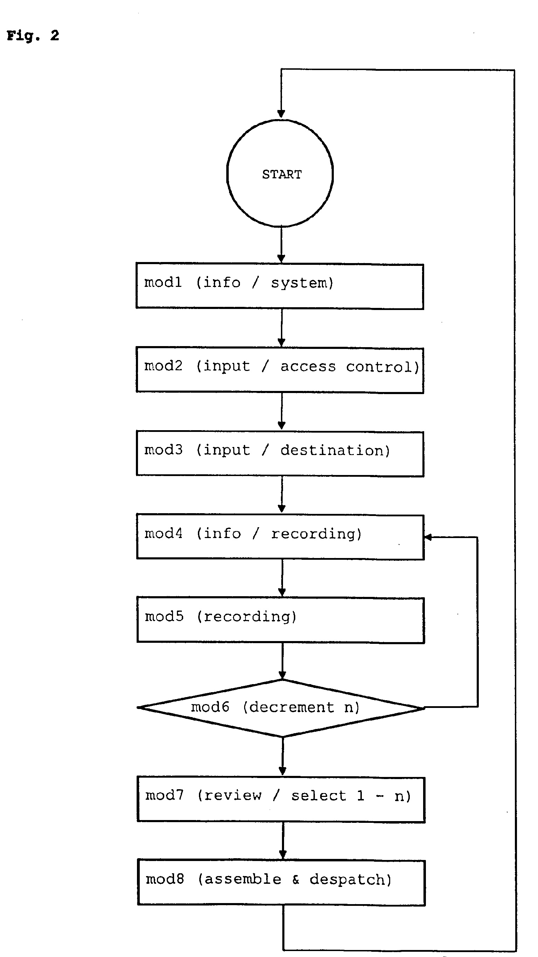

Das in Fig. 1 gezeigte Video Mail System 1 wird vorzugsweise nach dem in Fig. 2 dargestellten Verfahren betrieben. Vor Beginn eines Programmzyklus wird das System hochgefahren. Auf dem Computermonitor 23 des Computersystems 2 wird ein Einstiegsformular angezeigt. Die Videokamera 4 ist auf den an der Tastatur befindlichen Anwender gerichtet und macht zum Beispiel eine Portraitaufnahme, die zum Kontrollmonitor 42 übertragen wird.

Die Aufnahme und der Versand eines Video Mails erfolgt grundsätzlich gemäss den in Fig. 2 beschriebenen Verfahrensschritten, die mittels Programmmodulen mod1, ..., mod8 realisiert werden. Nach dem Drücken einer auf dem Einstiegsformular angezeigten Starttaste anhand der Tastatur 24 werden in einem nächsten Formular durch das erste Programmmodul mod1 Bedienungsinformationen angezeigt. In einem fakultativ vorgesehenen zweiten Programmmodul mod2 erfolgt eine Zutrittskontrolle. Das dritte Programmmodul mod3, anhand dem die Adresse eines oder mehrerer Empfänger eines Video Mails und gegebenenfalls zusätzlicher Text eingegeben werden kann, wird daher erst erreicht, nachdem ein korrektes Passwort eingegeben oder eine Gebühr entrichtet wurde. Die Gebühr wird mittels des Eingabegerätes 7 entrichtet, das als Münzautomat oder Kreditkartenleser ausgestaltet ist. Nach Eingabe der Adressinformationen werden durch das vierte Programmmodul mod4 Instruktionen für die Videoaufnahme ausgegeben. Anschliessend erfolgt, gesteuert durch das fünfte Programmmodul mod5, die Aufnahme. Dazu wird das Encodermodul 45 durch das Stapelmodul 32 angewiesen, von der Videokarte 41 und der Audiokarte 51 zugeführte Video-und Audiodaten während der vorgesehenen Aufnahmedauer zu codieren und, sofern vorgesehen, zu komprimieren und an das Computersystem 2 zu übertragen, wo die aufgenommenen Daten in bekannter Weise in einer Datei auf der Festplatte 21 gespeichert werden. Während der Aufnahme wird auf dem Computermonitor 23 vorzugsweise ' eine entsprechende Information ausgegeben (z.B. "Aufnahme läuft!"). Nach Abschluss der Aufnahme stellt das sechste Programmmodul mod6 fest, ob die festgelegte Anzahl n Aufnahmen bereits erreicht ist. Vorzugsweise werden nämlich zwei Aufnahmen gemacht, von denen der Anwender eine bevorzugte auswählen kann. Sofern n Aufnahmen zu machen sind, erfolgt beim sechsten Programmmodul mod6 jeweils ein Rücksprung zum vierten Programmmodul mod4 bis n Durchläufe erfolgt sind. Die Videoaufnahmen werden gesteuert durch das siebte Programmmodul mod7 sequentiell abgespielt, wonach der Anwender durch Eingabe einer Zahl 1; ...; n oder durch Drücken einer entsprechenden Steuertaste die bevorzugte Aufnahme ausgewählt wird. Die auf der Festplatte 21 abgelegten Video- und Audiodaten werden dazu abgerufen und anhand eines Video-/Audio - Wiedergabemoduls (z.B. Real-Media © Software) über den Computermonitor 23 bzw. die Audiokarte und den Lautsprecher 52 ausgegeben. Durch das achte Programmmodul mod8 erfolgt die Übertragung der erfassten Adress- und Textdaten sowie der Videodatei zur e-Mail Software, von der ein mit den zugeführten Daten und der Videodatei versehenes Video Mail über das Modem 8 und das Netzwerk 12 dem der eingegebenen Adresse entsprechenden Empfänger 9 zugestellt wird. Der Empfänger 9 verfügt ebenfalls über ein Video/Audio - Wiedergabemodul (z.B. Real-Media © Software), anhand dem die empfangenen Video- und Audiodaten abgespielt werden können. Das dritte Programmmodul mod3, anhand dem Adressdaten und Text eingegeben werden können, kann auch nach dem siebten Programmmodul mod7 eingeschoben sein, so dass der Anwender z.B. eine Möglichkeit zu schriftlichen Kommentierung der Aufnahme erhält oder den Kreis der Adressaten erweitern oder einschränken kann.

Im Detail kann die Benutzerführung wie folgt gestaltet sein. Der Computermonitor 23 zeigt eine Oberfläche, die mit den Bildschirm füllenden, in Visual Basic als Formulare bezeichneten Elementen gestaltet ist. Die Oberfläche des darunter liegenden Betriebssystems (z.B. Windows NT ©) ist dabei für den jeweiligen Anwender des Video Mail Systems 1 nicht sichtbar, so dass die Zugriffsmöglichkeiten des Anwenders auf die Video Mail Funktionen eingeschränkt sind. Die Navigation auf den Formularen erfolgt mit den Pfeiltasten der Tastatur oder mit der Maus.

Auf dem Einstiegsformular sind beispielsweise die Schalter "Start" und "Information" gezeigt, so dass der Anwender (in Abweichung zu dem in Fig. 2 gezeigten Verfahrensablauf) die notwendigen Informationen vor dem Systemstart abrufen kann. Auf dem Informationsformular ist daher ein "Zurück"-Schalter vorgesehen, der zurück zum Einstiegsformular führt.

Bei Betätigung des "Start"-Schalters erscheint ein Eingabeformular, in dem Eingabefelder für e-Mail Adresse, Betreff bzw. e-Mail Titel und e-Mail Text vorhanden sind. Die Eingaben des Anwenders werden gefiltert, so dass nur zulässige Zeichenkombinationen vom System übernommen und in entsprechenden Laufzeitvariablen festgehalten werden.

Durch Drücken eines "Weiter"-schalters gelangt der Anwender zu einem mit einem "Aufnahme"-Schalter versehenen Instruktionsformular, in dem die Details der Aufnahmeprozedur (Wartezeiten, Aufnahmedauer, Anzahl Aufnahmen, etc.) angegeben sind. Zu diesem Zeitpunkt wird vorzugsweise auch das zur Aufnahmesteuerung dienende Stapelmodul 32 erzeugt, welches die beispielsweise 15 Sekunden dauernde Aufnahme zu einem späteren Zeitpunkt starten wird. Mit in diesem Stapelmodul 32 sind nebst allgemeinen Angaben (z.B. Copyright Vermerke) auch der e-Mail Titel, der beim Empfänger als Titel der (Real-Media ©) Video-Datei (*.rm) in einem Verzeichnis der (Real-Media ©) Abspielsoftware sichtbar ist.

Nach dem Drücken des "Aufnahme"-Schalters hat der Anwender einige Sekunden (z.B. 10 Sekunden) Zeit, um sich für die Aufnahme vorzubereiten. Dabei sieht sich der Anwender laufend im Kontrollmonitor 42. Sind die 10 Sekunden, während denen auf dem Computermonitor vorzugsweise ein Countdown (10, 9, ..., 2, 1, Aufnahme läuft!) dargestellt wird, abgelaufen, startet die Aufnahme mittels des vorgängig erzeugten Stapelmoduls 32 automatisch. Das Stapelmodul 32 steuert das Encodermodul 45 nun derart, dass die von der Videokarte 41 und der Audiokarte 51 abgegebenen Video- und Audiodaten während der 15 Sekunden dauernden Aufnahme codiert, gegebenenfalls komprimiert, und in eine (Real-Media ©) Video-Datei (*.rm) auf der Festplatte 21 abgelegt werden.

Nach Abschluss der Aufnahme erfolgt der Rücksprung zum oben erwähnten oder zu einem weiteren Instruktionsformular, von dem aus eine zweite Aufnahme ausgelöst werden kann.

Nach Abschluss der vorgesehenen Aufnahmen gelangt der Anwender zu einem Auswahlformular, auf dem er die Möglichkeit hat, jedes Video noch einmal anzusehen. Dabei wird das betreffende Video auf der Oberfläche abgespielt und das Tonsignal über die Audiokarte 51 zum Lautsprecher 52 übertragen. Der Anwender kann jedes Video vorzugsweise nur ein Mal ansehen und muss dann entscheiden, welches der Videos als Anhang (Attachement) mit einem e-Mail bzw. Video Mail versendet werden soll. Die Auswahl erfolgt zum Beispiel durch Drücken eines Schalters "Video 1 senden" bzw. "Video 2 senden".

Hat der Anwender seine Auswahl getroffen, wird das e-Mail Programm (z.B. Microsoft ©, Outlook ©) über eine beim Steuermodul 32 vorgesehene Schnittstelle im Hintergrund aufgerufen. Das e-Mail Programm erstellt nun das e-Mail entsprechend den vom Anwender eingegebenen Daten und sendet dieses je nach Einstellung in der Konfigurationsdatei entweder sofort oder zwecks periodischer Kollektiv-Versendung erst nach Ablage in einem Zwischenspeicher.

In einer vorzugsweisen Ausgestaltung werden die e-Mails zusätzlich mit schaltbaren Feldern versehen, die den Empfänger nach dem Anklicken zu einer besonderen Internetseite führen. Weiterhin werden vorzugsweise auch in die zu übertragenden Videoaufnahmen schaltbare Felder integriert. Dadurch kann der Anwender auch dann noch Informationen abrufen, wenn die Videodatei bereits vom e-bzw. Video Mail abgetrennt wurde. Zum Auftragen von schaltbaren Feldern in ein dazu vorgesehenes Array der Videoaufnahme wird vom Stapelmodul 32 ein Submodul (Real-Media © Merge) des Encodermoduls 45 aktiviert, welches zur Integration bzw. Verschmelzung der Videodaten mit den Daten eines schaltbaren Feldes geeignet ist.

Die vom Anwender eingegebenen Daten können zudem in einer Datenbankdatei abgelegt werden, welche vom Administrator 10 regelmässig abgefragt wird. Die von den Video Mail Stationen abgefragten Daten, die zentral beim Administrator 10 in einer Datenbank 11 abgelegt werden, können daher zur Kontaktierung der Video Mail Empfänger verwendet werden. Durch einen Schalter auf dem Eingabeformular wird vorzugsweise die Zustimmung des Anwenders eingeholt, bevor dessen Daten gesammelt werden.

Das Video Mail System 1 kann in Ruhephasen auch als Werbeträger benutzt werden, indem vom Administrator 10 Werbemitteilungen zum Video Mail System 1 übertragen und dort während Perioden abgespielt werden, in denen das Video Mail System 1 nicht benutzt wird.

Der Administrator 10 dient vorzugsweise zur zentralen Wartung aller Video Mail Systeme 1. Dazu geeignete Wartungsprogramme (z.B. Timbuktu Pro ©) sind dem Fachmann bekannt.

Wie oben beschrieben, weist das in Fig. 1 gezeigte Video Mail System 1 einen Computermonitor 23 und einen Kontrollmonitor 42 auf. Auf die Verwendung eines Kontrollmonitors 42 kann jedoch verzichtet werden, wenn das Kontrollbild nur in den Phasen auf dem Computermonitor 23 angezeigt wird, in denen keine Informationen für den Anwender dargestellt werden. Möglich ist ferner die Verwendung einer Kommandoleiste an einem Rand der Oberfläche. Das von der Videokarte 41 abgegebene Videosignal wird in diesem Fall direkt oder über das Encodermodul 45 zum Computersystem 2 übertragen (in Fig. 1 strich-punktiert dargestellt) und dort auf dem Computermonitor 23 z.B. in einem Fenster auf der Oberfläche dargestellt.

Die Videokarte 41, die Audiokarte 51 und das Encodermodul 45 werden vorzugsweise in das Computersystem 2 integriert. Das Encodermodul 45 kann durch das Stapelmodul 32 daher in den Arbeitsspeicher der Recheneinheit 20 aufgerufen werden.

## Patentansprüche

1. Video Mail System (1) integriert in ein für die öffentliche Verwendung geeignetes Gehäuse (100) mit einem über eine Schnittstelle (8) mit einem Kommunikationsnetz (12) und über ein Encodermodul (45) und eine Videokarte (41) bzw. eine Audiokarte (51) mit einer Videokamera (4) und einem Mikrofon (5) verbundenen Computersystem (2), das eine Recheneinheit (20), eine Festplatte (21), eine Grafikkarte 22, einen Computermonitor (23), eine Tastatur (24) und ein Betriebssystem, ein e-Mail-Programm sowie ein Video Mail Anwenderprogramm(3) aufweist, das aus einem zur Kommunikation mit einem Anwender dienenden Steuermodul (31) und einem zur Steuerung von Videoaufnahmen dienenden Stapelmodul (32) besteht.

2. Video Mail System (1) nach Anspruch 1, **dadurch gekennzeichnet,** dass die Videokamera (4) mit einem Kontrollmonitor (52) verbunden ist, auf dem die von der Videokamera (4) aufgenommen Bilder dargestellt werden oder dass die Videokamera (4) über die Videokarte (41) mit dem Computersystem (2) verbunden ist, durch das die von der Videokamera (4) aufgenommen Bilder mittels dem Video Mail Anwenderprogramm (3) zusätzlich oder abwechselnd zu den Informationen für den Anwender auf der Oberfläche des Computer-monitors (23) darstellbar sind.

3. Video Mail System (1) nach Anspruch 1 oder 2, **dadurch gekennzeichnet,** dass das Computersystem (2) über eine gesonderte Audiokarte oder die genannte Audiokarte (51) mit einem Lautsprecher (52) verbunden ist.

4. Video Mail System (1) nach Anspruch 1, 2 oder 3, **dadurch gekennzeichnet,** dass das vom Steuermodul (31) kontrollierte Stapelmodul (32) den Aufnahmevorgang derart steuert, dass während der Dauer der Aufnahme aufgenommene Video- und Audiodaten mittels des Encodermoduls (45) codierbar, gegebenenfalls komprimierbar, und auf der Festplatte (21) in eine Datei übertragbar sind, die durch das Computersystem (2) nach Abschluss der Aufnahme abspielbar und mittels des e-Mail Programms in den Anhang eines e-Mails einfügbar ist.

5. Video Mail System (1) nach einem der Ansprüche 1 - 4, **dadurch gekennzeichnet,** dass durch das Steuermodul (31) für den Computermonitor (23) eine Oberfläche mit Informations-, Schalt-, Ein- und Ausgabefeldern aufweisenden Formularen erzeugbar ist, die sequentiell den erreichten Programmstufen der Aufnahmeprozedur angepasst wird.

6. Video Mail System (1) nach Anspruch 5, **dadurch gekennzeichnet,** dass die e-Mail Adresse eines vorgesehenen Empfängers, gegebenenfalls auch Text und Titel über die Formulare eingebbar und mittels des e-Mail Programms in das e-Mail einfügbar sind.

7. Video Mail System (1) nach einem der Ansprüche 1 - 6, **dadurch gekennzeichnet,** dass das Computersystem (2) mit einem Eingabegerät 7 verbunden ist, anhand dem die Einzahlung einer Benutzungsgebühr erfolgen kann.

8. Video Mail System (1) nach einem der Ansprüche 1 - 6, **dadurch gekennzeichnet,** dass ein mit dem Kommunikationsnetz (12) verbundener Administrator (10) vorgesehen ist, der auf dem Computermonitor (23) anzuzeigende Mitteilungen an das Video Mail System (1) übertragen kann, der zur Wartung des Video Mail Systems (1) vorgesehen ist und/oder der zur Abrufung und zentralen Ablage von Anwenderdaten geeignet ist.

9. Betriebsverfahren für ein Video Mail System (1) nach einem der Ansprüche 1 - 8, **dadurch gekennzeichnet,** dass mittels dem auf dem Betriebssystem des Computersystems aufgesetzte Anwenderprogramm (3), das aus einem zur Kommunikation mit einem Anwender dienenden Steuermodul (31) und einem zur Steuerung von Videoaufnahmen dienenden Stapelmodul (32) besteht,
- Benutzerinformationen an den Anwender abgegeben werden,
- gegebenenfalls eine Zugangskontrolle mittels Passwortabfrage oder Gebühreneinzug durchgeführt wird,
- e-Mail Daten wie e-Mail Adresse und Text abgefragt werden,
- Aufnahmeinstruktionen abgegeben werden,
- mittels eines vorgängig erzeugten Stapelprogramms Aufnahmen in vorgesehener Anzahl erzeugt werden, indem von Videokamera (4) und Mikrofon (5) aufgenommene Video- und Audiosignale während der Dauer der Aufnahme digitalisiert, codiert, gegebenenfalls komprimiert und in einer Video-Datei (*.rm) auf der Festplatte (21) abgelegt werden,
- die Aufnahmen abgespielt und eine vom Anwender selektierte Aufnahme bzw. die dazu entsprechende Video-Datei zusammen mit der e-Mail Adresse und gegebenenfalls weiteren Daten in ein e-Mail eingebunden werden,
- das anschliessend an das Kommunikationsnetz (12) übertragen wird.

10. Betriebsverfahren nach Anspruch 9, **dadurch gekennzeichnet,** dass in das Video Mail und/oder in die Videoaufnahme schaltbare Felder integriert werden.
